# EUROPEAN PATENT SPECIFICATION

(11) **EP 0 323 679 B1**
(45) Date of publication and mention of the grant of the patent: **10.03.1993**
(21) Application number: 88203020.8
(22) Date of filing: 27.12.1988
(51) Int. Cl.: G06K 7/016, G06K 13/08

(54) **A record and read device**
Aufnahme- und Wiedergabevorrichtung
Dispositif d'enregistrement et de reproduction

(30) Priority: 05.01.1988 SE 8800011
(43) Date of publication of application: 12.07.1989
(73) Proprietor: Philips Norden AB, 115 84 Stockholm (SE); Philips Electronics N.V., 5621 BA Eindhoven (NL)
(72) Inventor: Mattson, Per, NL-5656 AA Eindhoven (NL)
(74) Representative: Van Weele, Paul Johannes Frits

(56) References cited:
- EP-A- 0 232 115
- DE-A- 2 058 099
- DE-B- 2 705 534
- GB-A- 2 165 383
- SE-B- 377 396
- US-A- 1 933 714
- US-A- 3 548 196
- US-A- 3 716 698
- US-A- 3 929 278
- US-A- 4 081 131
- US-A- 4 180 823
- US-A- 4 332 492
- US-A- 4 598 810
- PATENT ABSTRACTS OF JAPAN, vol. 9, no. 329(P-416), abstract of JP 60-154357

## Description

The invention relates to a record and/or read device for record carriers of card type, comprising drive means to move the record carrier into the device over a first distance substantially equal to or longer than the carrier length in an input direction and a record and/or read head to scan the record carrier during relative movement between the carrier and the head.

A record and read device according to the above is available in the market. Said available device, however, presents troublesome dimensions, particular in a direction parallel to the direction of movement of the record carrier. In this direction the total length of the device has to amount to at least three times the length of the carrier.

In order that the operator shall not be able to manipulate the record carrier during the recording and/or reading process, the total record carrier has to be fed in before the recording and/or reading is started. The length of a record carrier is required for this purpose. During the subsequent feeding in of the record carrier the recording and/or reading of the record carrier takes place by means of a relative to the record and/or read device non-moveable head. One further record carrier length is used for this recording and/or reading. If, when the record carrier has been read, it is found that the record carrier ought to be confiscated, the record carrier has to be fed in a further record carrier length. Accordingly, a device as described above having a non-moveable head and an input direction parallel to the reading direction requires a total length of at least three record carrier lengths.

It is an object of the present invention to provide a compact and an easily located record and/or read device which is simple and component saving in its construction.

The object of the invention is obtained by that in scanning the record carrier, the carrier is movable in the input direction by means of the drive means over a second distance which is a continuation of the first distance and is shorter than the length of the carrier and the head is movable over a distance shorter than or equal to the second distance in a direction opposite to the input direction by a further drive means which is driven by the carrier as a result of frictional contact between the moving carrier and the further drive means which further drive means comprise a transmission element fixedly mounted to a supporting section of the device. The device according to the invention only requires one and a half record carrier length, that is only half the length in comparison with the available device. This will be apparent from the description below with reference to the drawings.

Another read device is previously known from SE published patent application 6917963-8, corresponding to US-A-3 939 327. The record carrier is in this case introduced in a direction which is perpendicular to the direction of movement of the read head. The reading is carried out in that the read head is moved across a record carrier which according to the shown embodiments is stationary relative to the read device. By the way it is further in said publication pointed out that the relative movement between the read head and the record carrier may be obtained in another way, for example, by means of a simultaneous displacement of both the read head and the record carrier. Such an embodiment is neither shown or indicated. Due to the fact that the record carrier is introduced in a direction which is perpendicular to the direction of movement of the read head, the prior art device occupies an essentially greater space in a surface region facing the operator in comparison with the device according to the invention. This renders the device difficult to locate in comparison with the device according to the invention.

A drive means comprising a fixedly mounted wire and a roll provided with a shaft around which the wire has been wound a number of revolutions is known from US 4,180,823. This known drive means is used in a control device for controlling the movement of two carriages where the linar movement of one carriage is coupled at a fixed proportion to the movement of the other carriage.

According to one favourable embodiment of the invention, the device is characterized in that the distance over which the head moves in a direction opposite to the input direction is substantially equal to said second distance. This embodiment involves a minimizing of the length dimension of the device in the case when the whole record carrier is scanned on the same side of the drive roll and pressure roll of the drive means, which is often to prefer. Hereby the device is especially spaced saving in the length direction.

According to another favourable embodiment the record and/or read device is characterized in that a number of auxiliary rolls are disposed in connection to the record and/or read head, the auxiliary rolls being rotated by the record carrier and move together with the head in order to decrease sliding friction between the head and the record carrier. The auxiliary rolls protects the record and/or read head against wear and facilitates the movement of the record carrier between the head and the friction means.

By means of the device according to the invention a very simple synchronizing of the carrier and head is obtained. The carrier operates as a link between the drive means and the head and the feeding in in front of the head releases directly an simultaneous mutually opposite motion of the head and carrier. No synchronizing problems occur and there are no need for sensors sensing that the carrier has been fed into position in front of the head.

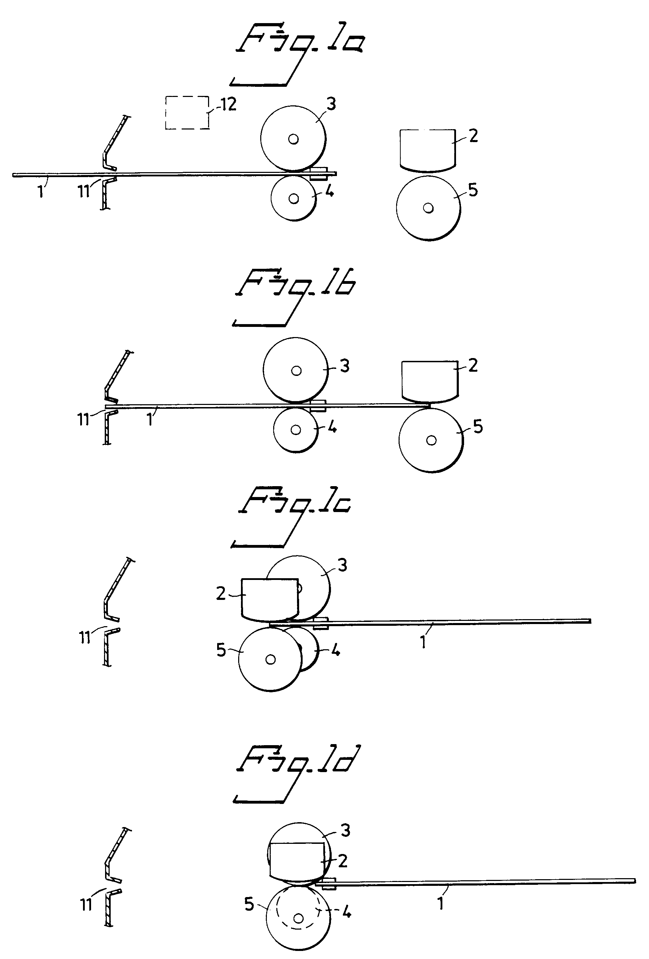

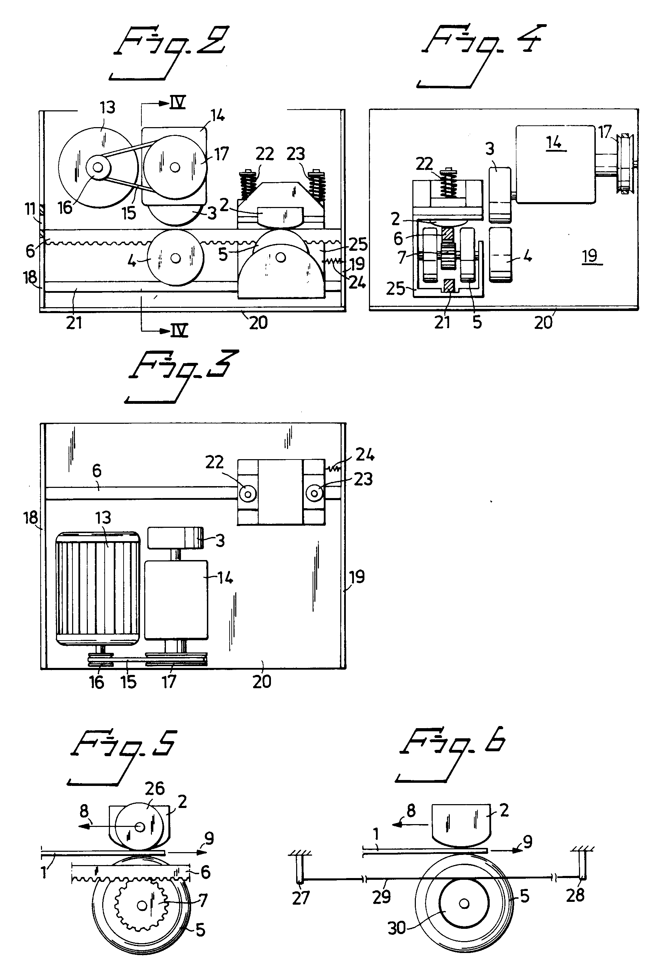

The invention will now be described in more detail with reference to the accompanying drawings, in which figure 1a-d schematically shows the feeding in of an record carrier into a record and/or read device in four different stages, figure 2 shows a schematical side view of a record and/or read device, figure 3 shows a schematical top view of the record and/or read device, figure 4 shows a section along the line IV-IV in figure 2 and figure 5 more clearly shows the disposition of coupling means in a record and/or read device according to figures 2-4, and figure 6 schematically shows an alternative disposition of the coupling means in an record and/or read device.

The record and/or read device schematically shown in figure 1a-d, which is intended for a record carrier of card type, for example a bank card, comprises drive means having a drive roll 3 and a pressure roll 4 located half a record carrier length from the input opening 11 of the device. The device comprises further a friction roll 5 and a record and/or read head 2 located on a displaceable carrage (not shown in figure 1). The friction roll 5 and the head 2 are arranged to be displaceable at least slightly more than half the record carrier length.

When the record carrier 1 is fed into the input opening 11 at first normally a control takes place to ensure that a record carrier really is fed in and that it is turned right way around relative to the record and/or read device before a continued feeding in is allowed. This control equipment is not shown in the figure and is not either a part of the invention applied for a patent. If the control equipment allows a continued feeding in of the record carrier, the operator may push in the record carrier so far that the inner end of the record carrier is grasped by the drive and pressure rolls 3 and 4, respectively. The drive roll 3 and the pressure roll 4 will now take over the further feeding in of the record carrier. Figure 1a shows the stage when the drive roll and the pressure roll take over the feeding in. From the stage shown in figure 1a to the stage shown in figure 1b the remaining part of the record carrier is fed in. In the stage shown in figure 1b the record carrier is moved in over a first distance substantially equal to the record carrier length. When the whole record carrier has been fed in, the recording and/or reading may start. The drive and pressure rolls 3, 4, respectively, will now bring the record carrier 1 between the head 2 and the friction roll 5. The recording and/or reading takes place between the stage shown in figure 1b and the stage shown in figure 1c and by means of a further feeding in of the record carrier over a second distance, which is a continuation of the first distance and is half the length of the record carrier, by the drive and the pressure rolls 3, 4 at the same time as the head 2 and the friction roll 5 are moved towards the input opening. The movement of the head and the friction roll is obtained by means of a friction coupling between the friction roll and the record carrier by means of the head at the same time as the friction roll is rotatable coupled to a fixedly arranged transmission element. The coupling of the friction roll will be described in more detail in connection with the description of the figures 2-5.

A verifying means 12 verifies the validity of a record carrier which has been fed in. The verifying means is only shown as a box drawn by means of dashed lines in figure 1a. In the case that the record carrier which has been fed in is regarded as valid by the verifying means, a feeding out of the record carrier by means of a reversal of the drive roll 3 and thereby the pressure roll 4 is allowed when the recording and/or reading have been finished. If on the other hand the record carrier is regarded as non-valid, it is confiscated by the device. This is obtained by feeding in the record carrier somewhat further to the stage shown in figure 1d by means of the drive roll and the pressure roll. In the last mentioned stage the record carrier is released from the coupling between the friction roll and the head and may fall down under the influence of the gravitational force.

As is apparent from figure 1 the device then requires a total length of approximately one and a half record carrier length, namely slight more than a half record carrier length between the input opening and the drive roll and one complete record carrier length between the drive roll and the inner end of the device.

With reference to the figures 2-5 the driving of the record carrier and the head will now be described in more detail. Components with correspondance in figure 1 have been given the same reference numerals.

The drive roll 3 is driven by a drive motor 13. In order to obtain a suitable gear change the drive roll is coupled via a gear box 14. The transmission between the drive motor 13 and the gear box 14 is obtained by means of a driving belt 15 which transmits the rotation of a pulley 16 arranged on a motor shaft to a pulley 17 mounted on an input shaft of the gear box 14. The device comprises a front and a back supporting section 18 and 19, respectively, mounted on a bottom plate 20. For moving the head 2 the device comprises a further drive means comprising a fixed mounted element 6 and a friction roll 5. The fixedly mounted transmission element in the shape of a gear rack 6 is arranged between the supporting sections 18, 19 as well as a guide rail 21. A carrage 25 provided with the friction roll 5 and a record and/or read head 2 cooperate with the gear rack 6 and the guide rail 21 to control the movement along the gear rack 6. As is most apparent from the figures 4 and 5 a gear wheel 7 arranged on the friction roll is in engagement with the gear rack 6.

The head 2 is resilently supported by means of two springs 22, 23 in order to protect the same. A weak spring load caused by loading means, symbolically indicated, by means of the spring 24, with a weak force tends to bring the carrage 25 to the position shown in figure 1a in the case when no record carrier is present between the head and the friction roll. When a record carrier by means of the drive and pressure rolls are fed in between the head and the friction roll, the gear wheel 7 arranged on the friction roll is rotated along the fixed part in the device, which in this case consists of the gear rack 6. During the continued feeding in of the record carrier the record carrier 1 is moved in an input direction 9 (see figure 5) and the head 2 in an opposite direction 8 (see figure 5).

The coupling between the friction roll and the fixedly mounted transmission element consists according to the above of a gear coupling, but of course other couplings are conceivable within the scope of the invention. For example, the friction roll, as according to the embodiment shown in figure 6, may be coupled to two fixed fastening points 27, 28 via a wire 29. In this case the friction roll 5 is provided with a shaft 30 around which the wire has been wound a number of revolutions and stretched. A suitable ratio of the radius of the shaft and the friction roll is 1:2. Elements in figure 6 which have correspondance in the figures 1-5 have also been given the same reference numerals.

In order to facilitate the movement of the record carrier past the head, the head as shown in figure 5 may be provided with a number of auxiliary rolls 26. According to an appropriate solution an auxiliary roll 26 is located on each side of the head. It is even conceivable to divide the head into several parts and between these introduce further auxiliary rolls.

## Claims

1. A record and/or read device for record carriers (1) of card type, comprising drive means (3, 4) to move the record carrier (1) into the device over a first distance substantially equal to or longer than the record carrier length in a input direction (9) and a record ad/or read head (2) to scan the record carrier (1) during relative movement between the record carrier and the head,
- the record carrier (1) being movable in the input direction (9) by means of the drive means (3, 4) over a second distance which is a continuation of the first distance and is shorter than the length of the record carrier, and
- the head (2) being movable over a distance shorter than or equal to the second distance in a direction (8) opposite to the input direction (9) by a further drive means (5, 6, 7; 5, 29, 30) which is driven by the record carrier (1) as a result of frictional contact between the moving record carrier and the further drive means commencing when the record carrier has moved the first distance, which further drive means comprises a transmission element (6; 29) fixedly mounted to a supporting section (18, 19) of the device.

2. A record and/or read device as claimed in claim 1, characterized in that the distance over which the head (2) moves in a direction (8) opposite to the input direction (9) is substantially equal to said second distance.

3. A record and/or read device as claimed in any of the preceding claims, characterized in that a number of auxiliary rolls (26) are disposed in connection to the record and/or read head (2), the auxiliary rolls (26) being rotated by the record carrier (1) and move together with the head (2) in order to decrease sliding friction between the head and the record carrier.

4. A record and/or read device as claimed in any of the preceding claims, characterized in that the drive means comprises a drive roll (3) and a pressure roll (4) intended for contact with the record carrier (1).

5. A record and/or read device as claimed in any one of the preceding claims, characterized in that the further drive means comprises a friction roll (5).

6. A record and/or read device as claimed in Claim 5, characterized in that the fixedly mounted transmission element consists of a gear rack (6) in gear engagement with a gear wheel (7) coupled to said friction roll (5).

7. A record and/or read device as claimed in Claim 5, characterized in that the fixed mounted transmission element consists of a wire (29) which is wound a number of revolutions around a shaft (30) of said friction roll (5).

8. A record and/or read device as claimed in any of the preceding claims, characterized in that the drive means (3, 4) and consequently the further drive means (5, 6, 7; 5, 29, 30) are arranged to reverse the movement directions (8, 9) for the head (2) and the record carrier (1) when a record carrier after recording and/or reading is regarded as valid, and the drive means (3, 4) are arranged to continue the feeding in of the record carrier (1) in the input direction (9) for confiscation when the record carrier is regarded as non-valid, the drive means (3, 4) being controlled from a verifying means (12) for verifying the validity of the record carrier.

9. A record and/or read device as claimed in any of the preceding claims, characterized in that a loading means (24) exerts an influence on the head (2) in order to bring it to an end position when the head (2) is not driven by the further drive means (6, 7; 29, 30) in which end position the device is prepared to receive a record carrier (1) again.

10. A record and/or read device as claimed in claim 9, characterized in that the loading means is a spring (24).

11. A record and/or read device as claimed in any of the preceding claims, characterized in that the record and/or read head (2) and the friction roll (5) are arranged on a common and moveable carriage (25).

## Patentansprüche

1. Aufzeichnungs- und/oder Leseeinrichtung für kartenförmige Aufzeichnungsträger (1) mit Antriebsmitteln (3, 4) zum Einführen des Aufzeichnungsträgers (1) über einen ersten Abstand in die Einrichtung hinein, wobei dieser Abstand der Länge des Trägers nahezu entspricht oder größer ist als diese Länge in einer Einführungsrichtung (9) und mit einem Aufzeichnungs- und/oder Lesekopf (2) zum Abtasten des Aufzeichnungsträgers (1) während der relativen Bewegung zwischen dem Träger und dem Kopf, wobei
- der Aufzeichnungsträger (1) mittels des Antriebsmittels (3, 4)über einen zweiten Abstand in der Einführungsrichtung (9) beweglich ist, wobei dieser Abstand eine Fortsetzung des ersten Abstandes ist und kürzer ist als die Länge des Aufzeichnungsträgers, und
- der Kopf (2) über einen Abstand beweglich ist, der kürzer ist als der zweite Abstand oder diesem Abstand entspricht, in einer Richtung (8), die der Einführungsrichtung (9) entgegengesetzt ist, und zwar mittels eines weiteren Antriebsmittels (5, 6, 7; 5, 29, 30), das als Ergebnis eines Reibungskontaktes zwischen dem beweglichen Aufzeichnungsträger und dem weiteren Antriebsmittel durch den Aufzeichnungsträger (1) angetrieben wird, wobei dieser Kontakt anfängt, wenn der Aufzeichnungsträger über den erstgenannten Abstand eingeführt worden ist, wobei dieses weitere Antriebsmittel ein an einem Besfestigungsteil (18, 19) der Einrichtung ortsfest angeordnetes Übertragungselement (6; 29) aufweist.

2. Aufzeichnungs- und/oder Leseeinrichtung nach Anspruch 1, dadurch gekennzeichnet, daß der Abstand, über den der Kopf (2) in einer der Einführungsrichtung (9) entgegengesetzten Richtung (8) bewegt wird, dem genannten zweiten Abstand nahezu entspricht.

3. Aufzeichnungs- und/oder Leseeinrichtung nach einem der vorstehenden Ansprüche, dadurch gekennzeichnet, daß eine Anzahl Hilfsrollen (26) in Verbindung mit dem Aufzeichnungs- und/oder Lesekopf (2) vorgesehen sind, wobei diese Hilfsrollen (26) durch den Aufzeichnungsträger (1) ins Rollen gebracht werden und zusammen mit dem Kopf (2) bewegen, damit die Schiebereibung zwischen dem Kopf und dem Aufzeichnungsträger verringert wird.

4. Aufzeichnungs- und/oder Leseeinrichtung nach einem der vorstehenden Ansprüche, dadurch gekennzeichnet, daß das Antriebsmittel eine Antriebsrolle (3) und eine Anpreßrolle (4) zum Kontakt mit dem Aufzeichnungsträger (1) aufweist.

5. Aufzeichnungs- und/oder Leseeinrichtung nach einem der vorstehenden Ansprüche, dadurch gekennzeichnet, daß das weitere Antriebsmittel eine Reibrolle (5) aufweist.

6. Aufzeichnungs- und/oder Leseeinrichtung nach Anspruch 5, dadurch gekennzeichnet, daß das ortsfest angeordnete Übertragungselement aus einer Zahnstange (6) besteht, die mit einem mit der genannten Reibrolle (5) gekuppelten Zahnrad (7) im Eingriff ist.

7. Aufzeichnungs- und/oder Leseeinrichtung nach Anspruch 5, dadurch gekennzeichnet, daß das ortsfest angeordnete Übertragungselement aus einem Draht (29) besteht, der einige Male um eine Achse (30) der genannten Reibrolle (5) gewickelt ist.

8. Aufzeichnungs- und/oder Leseeinrichtung nach einem der vorstehenden Ansprüche, dadurch gekennzeichnet, daß die Antriebsmittel (3, 4) und folglich die weiteren Antriebsmittel (5, 6, 7; 5, 29, 30) dazu vorgesehen sind, die Bewegungsrichtung (8, 9) des Kopfes (2) und des Aufzeichnungsträgers (1) umzukehren, wenn ein Aufzeichnungsträger nach dem Aufzeichnen und/oder Auslesen als gültig bewertet wird, und die Antriebsmittel (3, 4) dazu vorgesehen sind, das Einführen des Aufzeichnungsträgers (1) in der Einführungsrichtung (9) zum Einnehmen fortzusetzen, wenn der Aufzeichnungsträger als ungültig bewertet wird, wobei die Antriebsmittel (3, 4) von einem Überprüfungsmittel (12) zum Überprüfen der Gültigkeit des Aufzeichnungsträgers gesteuert wird.

9. Aufzeichnungs- und/oder Leseeinrichtung nach einem der vorstehenden Ansprüche, dadurch gekennzeichnet, daß ein Belastungsmittel (24) auf den Kopf (2) eine Kraft ausübt, damit dieser Kopf (2) in eine Endlage gebracht wird, wenn er von den weiteren Antriebsmitteln (6, 7; 29, 30) nicht weiter angetrieben wird, wobei die Einrichtung in dieser Endlage wieder für einen Aufzeichnungsträger (1) empfangsbereit ist.

10. Aufzeichnungs- und/oder Leseeinrichtung nach Anspruch 9, dadurch gekennzeichnet, daß das Belastungsmittel eine Feder (24) ist.

11. Aufzeichnungs- und/oder Leseeinrichtung nach einem der vorstehenden Ansprüche, dadurch gekennzeichnet, daß der Aufzeichnungs- und/oder Lesekopf (2) und die Reibrolle (5) auf einem gemeinsamen und beweglichen Wagen (25) angeordnet sind.

## Revendications

1. Dispositif d'enregistrement et/ou de lecture pour des supports d'enregistrement (1) du type carte, comprenant un moyen d'entraînement (3, 4) pour déplacer le support d'enregistrement (1) dans le dispositif d'une première distance en substance égale ou supérieure à la longueur du support d'enregistrement dans une direction d'entrée (9) et une tête d'enregistrement et/ou de lecture (2) pour balayer le support d'enregistrement (1) pendant un déplacement relatif entre le support d'enregistrement et la tête,
- le support d'enregistrement (1) pouvant être déplacé dans la direction d'entrée (9) à l'intervention du moyen d'entraînement (3, 4) d'une seconde distance qui est une continuation de la première distance et est plus courte que la longueur du support d'enregistrement, et
- la tête (2) pouvant être déplacée d'une distance plus courte que la seconde distance ou égale à celle-ci dans une direction (8) opposée à la direction d'entrée (9) par un autre moyen d'entraînement (5, 6, 7; 5, 29, 30) qui est entraîné par le support d'enregistrement (1) suite au contact de friction entre le support d'enregistrement en mouvement et l'autre moyen d'entraînement qui débute lorsque le support d'enregistrement a parcouru la première distance, cet autre moyen d'entraînement comprenant un élément de transmission (6, 29) monté fixe sur une section de support (18, 19) du dispositif.

2. Dispositif d'enregistrement et/ou de lecture suivant la revendication 1, caractérisé en ce que la distance de laquelle la tête (2) se déplace dans une direction (8) opposée à la direction d'entrée (9) est en substance égale à la seconde distance.

3. Dispositif d'enregistrement et/ou de lecture suivant l'une quelconque des revendications précédentes, caractérisé en ce qu'un certain nombre de galets auxiliaires (26) sont disposés en association avec la tête d'enregistrement et/ou de lecture (2), les galets auxiliaires (26) étant entraînés en rotation par le support d'enregistrement (1) et se déplaçant conjointement avec la tête (2) pour diminuer la friction de glissement entre la tête et le support d'enregistrement.

4. Dispositif d'enregistrement et/ou de lecture suivant l'une quelconque des revendications précédentes, caractérisé en ce que le moyen d'entraînement comprend un galet d'entraînement (3) et un galet presseur (4) devant venir en contact avec le support d'enregistrement (1).

5. Dispositif d'enregistrement et/ou de lecture suivant l'une quelconque des revendications précédentes, caractérisé en ce que l'autre moyen d'entraînement comprend un galet à friction (5).

6. Dispositif d'enregistrement et/ou de lecture suivant la revendication 5, caractérisé en ce que l'élément de transmission monté fixe comprend une crémaillère (6) en prise avec une roue dentée (7) accouplée au galet à friction (5).

7. Dispositif d'enregistrement et/ou de lecture suivant la revendication 5, caractérisé en ce que l'élément de transmission monté fixe comprend un fil métallique (29) qui est enroulé un certain nombre de fois autour d'un arbre (30) du galet à friction (5).

8. Dispositif d'enregistrement et/ou de lecture suivant l'une quelconque des revendications précédentes, caractérisé en ce que le moyen d'entraînement (3, 4) et, par conséquent, l'autre moyen d'entraînement (5, 6, 7; 5, 29, 30) sont prévus pour inverser les directions de mouvement (8, 9) pour la tête (2) et le support d'enregistrement (1) lorsqu'un support d'enregistrement, après enregistrement et/ou lecture, est considéré comme valide, et le moyen d'entraînement (3, 4) est prévu pour poursuivre l'introduction du support d'enregistrement (1) dans la direction d'entrée (9) en vue de sa confiscation lorsque le support d'enregistrement est considéré comme non valide, le moyen d'entraînement (3, 4) étant commandé à partir d'un moyen de vérification (12) destiné à vérifier la validité du support d'enregistrement.

9. Dispositif d'enregistrement et/ou de lecture suivant l'une quelconque des revendications précédentes, caractérisé en ce qu'un moyen de sollicitation (24) exerce une influence sur la tête (2) afin de l'amener dans une position d'extrémité lorsque la tête (2) n'est pas entraînée par l'autre moyen d'entraînement (6, 7; 29, 30), position d'extrémité dans laquelle le dispositif est préparé à recevoir à nouveau un support d'enregistrement (1).

10. Dispositif d'enregistrement et/ou de lecture suivant la revendication 9, caractérisé en ce que le moyen de sollicitation est un ressort (24).

11. Dispositif d'enregistrement et/ou de lecture suivant l'une quelconque des revendications précédentes, caractérisé en ce que la tête d'enregistrement et/ou de lecture (2) et le galet à friction (5) sont disposés sur un chariot commun et mobile (25).
